Europäisches Patentamt

(19)　European Patent Office

Office européen des brevets

(11)　**EP 0 743 002 B1**

(12)　**EUROPEAN PATENT SPECIFICATION**

(45) Date of publication and mention
of the grant of the patent:
**07.01.1999 Bulletin 1999/01**

(51) Int. Cl.$^6$: **A01N 57/34**
// (A01N57/34, 59:00, 43:66,
43:50)

(21) Application number: **96201621.8**

(22) Date of filing: **01.08.1991**

(54) **Bacterial inhibiting compositions and their use**

Bakterienhemmende Zusammensetzungen und deren Verwendung

Compositions inhibitrices des bactéries et leur utilisation

| | |
|---|---|
| (84) Designated Contracting States:<br>**AT BE DE ES FR GB IT NL SE** | (73) Proprietor:<br>**BetzDearborn Europe, Inc.**<br>**Trevose PA 19053-6783 (US)** |
| (30) Priority: **13.08.1990 US 566957**<br>**13.08.1990 US 566958**<br>**13.08.1990 US 566956**<br>**13.08.1990 US 566955**<br>**13.08.1990 US 566953**<br>**13.08.1990 US 566952**<br>**13.08.1990 US 566954**<br>**13.08.1990 US 566951**<br>**13.08.1990 US 566950** | (72) Inventors:<br>• **Whitekettle, Wilson Kurt**<br>　**Conroe, TX 77302 (US)**<br>• **Donofrio, Deborah Kalman**<br>　**The Woodlands, TX 77380 (US)**<br><br>(74) Representative:<br>**W.P. Thompson & Co.**<br>**Coopers Building,**<br>**Church Street**<br>**Liverpool L1 3AB (GB)** |
| (43) Date of publication of application:<br>**20.11.1996 Bulletin 1996/47** | |
| (62) Document number(s) of the earlier application(s) in accordance with Art. 76 EPC:<br>**91307093.4 / 0 471 481** | (56) References cited:<br>**EP-A- 0 066 544** |

**Description**

The present invention relates to bacterial inhibiting or biocidal compositions. More particularly it relates to bacterial inhibiting compositions comprising n-tributyl tetradecylphosphonium chloride and at least one other component, the composition exhibiting synergy.

The formation of slimes by microorganisms is a problem that is encountered in many aqueous systems. For example, the problem is not only found in natural waters such as, for example, lagoons, lakes or ponds, and confined waters as in pools, but also in such industrial systems as cooling water systems, air washer systems and pulp and paper mill systems. All possess conditions which are conducive to the growth and reproduction of slime-forming microorganisms. In both once-through and recirculating cooling systems, for example, which employ large quantities of water as a cooling medium, the formation of slime by microorganisms is an extensive and constant problem.

Airborne organisms are readily entrained in the water from cooling towers and find this warm medium an ideal environment for growth and multiplication. Aerobic and heliotropic organisms flourish on the tower proper while other organisms colonize and grow in such areas as the tower sump and the piping and passages of the cooling system. The slime formation not only aids in the deterioration of the tower structure in the case of wooden towers, but also promotes corrosion when it deposits on metal surfaces. Slime carried through the cooling system plugs and fouls lines, valves, strainers, and the like and deposits on heat exchange surfaces. In the latter case, the impedance of heat transfer can greatly reduce the efficiency of the cooling system.

In pulp and paper mill systems, slime formed by microorganisms is commonly encountered and causes fouling, plugging, or corrosion of the system. The slime also becomes entrained in the paper produced to cause breakouts on the paper machines, which results in work stoppages and the loss of production time. The slime is also responsible for unsightly blemishes in the final product, which result in rejects and wasted output.

The previously discussed problems have resulted in the extensive utilization of biocides in cooling water and pulp and paper mill systems. Materials which have enjoyed widespread use in such applications include chlorine, chlorinated phenols, organo-bromines, and various organo-sulphur compounds. All of these compounds are generally useful for this purpose but each is attended by a variety of impediments. For example, chlorination is limited both by its specific toxicity for slime-forming organisms at economic levels and by the tendency of chlorine to react, which results in the expenditure of the chlorine before its full biocidal function is achieved.

Other biocides are attended by odour problems and hazards with respect to storage, use or handling which limit their utility. To date, no one compound or type of compound has achieved a clearly established predominance with respect to the applications discussed. Likewise, lagoons, ponds, lakes, and even pools, either used for pleasure purposes or used for industrial purposes for the disposal and storage of industrial wastes, become, during the warm weather, besieged by slime due to microorganism growth and reproduction. In the case of industrial storage or disposal of industrial materials, the microorganisms cause additional problems which must be eliminated prior to the use of the materials or disposal of the waste.

Naturally, economy is a major consideration with respect to all of these biocides. Such economic considerations attach to both the cost of the biocide and the expense of its application. The cost performance index of any biocide is derived from the basic cost of the material, its effectiveness per unit of weight, the duration of its biocidal or biostatic effect in the system treated, and the ease and frequency of its addition to the system treated. To date, none of the commercially available biocides has exhibited a prolonged biocidal effect. Instead, their effectiveness is rapidly reduced as a result of exposure to physical conditions such as, for example, temperature, association with ingredients contained by the system toward which they exhibit an affinity or substantivity, or the like with a resultant restriction or elimination of their biocidal effectiveness, or by dilution.

As a consequence, the use of such biocides involves their continuous or frequent addition to systems to be treated and their addition to multiple points or zones in the systems to be treated. Accordingly, the cost of the biocide and the labour cost of applying it are considerable. In other instances, the difficulty of access to the zone in which slime formation is experienced precludes the effective use of a biocide. For example, if in a particular system there is no access to an area at which slime formation occurs the biocide can only be applied at a point which is upstream in the flow system. However, the physical or chemical conditions, e.g., chemical reactivity or thermal degradation, which exist between the point at which the biocide may be added to the system and the point at which its biocidal effect is desired render the effective use of a biocide impossible.

Similarly, in a system experiencing relatively slow flow, such as, for example, a paper mill, if a biocide is added at the beginning of the system, its biocidal effect may be completely dissipated before it has reached all of the points at which this effect is desired or required. As a consequence, the biocide must be added at multiple points, and even then a diminishing biocidal effect will be experienced between one point of addition to the system and the next point downstream at which the biocides may be added. In addition to the increased cost of utilizing and maintaining multiple feed points, gross ineconomies with respect to the cost of the biocide are experienced. Specifically, at each point of addition, an excess of the biocide is added to the system in order to compensate for that portion of the biocide which will be expended in reacting with other constituents present in the system or experience physical changes which impair its biocidal activity.

It has now been found possible to provide a bacterial or biocidal composition which comprises, as active ingredients, n-tributyl tetradecyl phosphonium chloride (TPC) and at least one additional chemical component

The additional component may be:

1. sodium hypochlorite (hypochlorite),
2. trichloro-s-triazine trione (TTT), or
3. bromochlorohydantoin (BCH).

TPC is commercially available from Ciba-Geigy under the Trade Mark "Belclene 350" and is marketed as a "broad spectrum biocide specifically developed for the control of microbiological fouling in cooling water systems". Use of the TPC compound in a biological composition is disclosed in US-A- 4 725 587 and US-A- 4 835 144 (Whitekettle et al), and US-A-4 835 143 (Donofrio et al) both of which have been assigned to the present Applicant.

The physical properties of "Belclene 350" are reported as being:

| | |
|---|---|
| Appearance | Clear, colourless liquid |
| Specific Gravity at 20°C | 0.96 |
| pH | 7.0 - 8.0 |
| Boiling Point | 100°C |
| Freezing Point | -8 to -10°C |
| Viscosity | 50 - 80 cP |
| Odour | Slight |
| Solubility Water | Completely miscible in all proportions |
| Methanol | Greater than 50% |
| Isopropanol | Greater than 50% |
| Ethylene Glycol | Greater than 50% |

Hypochlorite is commercially available from several sources, including Jones Chemical Company, the Olin Corporation, and the Pennwalt Corporation.

Trichloro-s-triazine trione is commercially available from the Olin Chemical Company under the Trade Mark "CDB-90".

Bromochlorohydantoin is commercially available from Glyco Chemical Company, Inc., and Great Lakes Chemical Company.

The synergistic effects obtained by combining TPC with any of the additional biocidal components listed above have not been previously disclosed.

Surprisingly, it has now been found that mixtures of TPC and with any of the additional biocidal components listed are especially efficacious in controlling the growth of bacterial microbes, specifically the Klebsiella pneumoniae species. This particular species is a member of the capsulated, facultative class of bacteria and is generally present in air, water and soil.

These bacteria continually contaminate open cooling systems and pulping and papermaking systems and are among the most common slime formers. The slime may be viewed as being a mass of agglomerated cells stuck together by the cementing action of the gelatinous polysaccharide or proteinaceous secretions around each cell. The slimy mass entraps other debris, restricts water flow and heat transfer, and may serve as a site for corrosion.

The fact that the Klebsiella species used in the tests is a facultative species is important as, by definition, such bacteria may thrive under either aerobic or anaerobic conditions. Accordingly, by reason of demonstrated efficacy in the growth inhibition of this particular species, one can expect similar growth inhibition attributes when other aerobic or anaerobic bacterial species are encountered. It is also expected that these compositions will exhibit similar growth inhibition attributes when fungi and algae species are encountered.

According to the present invention there is therefore provided a method for controlling the growth of bacteria, particularly Klebsiella pneumoniae bacteria, in an aqueous system which comprises adding to the system from about 0.1 to 200 parts by weight of a composition per one million parts by weight of the aqueous system, the composition comprising a synergistic mixture of (a) n-tributyl tetradecyl phosphonium chloride and (b) at least one additional biocidical component selected from (1) to (3) as hereinbefore defined. The aqueous system may comprise, for example, a cooling water system or a pulping and papermaking system.

In accordance with the present invention, the treatment of TPC in combination with any one of the additional biocidal components may be added to the desired aqueous system in need of biocidal treatment, in an amount of from about 0.1 to about 200 parts of the combined treatment to one million parts (by weight) of the aqueous medium. Preferably, about 5 to about 50 parts of the combined treatment per one million parts (by weight) of the aqueous medium is added.

The combined treatments are added, for example, to cooling water systems, paper and pulp mill systems, pools, ponds, lagoons, or lakes, to control the formation of bacterial microorganisms, which may be contained by, or which may become entrained in, the system to be treated. It has been found that the compositions and methods of utilization of the treatments are efficacious in controlling the facultative bacterium, <u>Klebsiella pneumoniae</u>, which may populate these systems. It is thought that the combined treatment compositions and methods of the present invention will also be efficacious in inhibiting and controlling all types of aerobic and anaerobic bacteria.

Surprisingly, it has been found that when the ingredients are mixed, in certain instances, the resulting mixtures possess a higher degree of bactericidal activity than that of the individual ingredients comprising the mixtures. Accordingly, it is possible to produce highly efficacious bactericides. Because of the enhanced activity of the mixtures, the total quantity of each of the bacterial treatments may be reduced. In addition, the high degree of bactericidal effectiveness which is provided by each of the ingredients may be exploited without use of higher concentrations of each.

The following experimental data were developed. It is to be remembered that the following examples are to be regarded solely as being illustrative, and not as restricting the scope of the invention.

TPC and an additional biocidal component were added in varying ratios and over a wide range of concentrations to a liquid nutrient medium which was subsequently inoculated with a standard volume of a suspension of the facultative bacterium <u>Klebsiella pneumoniae</u>. Growth was measured by determining the amount of radioactivity accumulated by the cells when 14C-glucose was added as the sole source of carbon in the nutrient medium. The effect of the biocide chemicals, alone and in combination, is to reduce the rate and amount of 14C incorporation into the cells during incubation, as compared to controls not treated with the chemicals. Additions of the biocides, alone and in varying combinations and concentrations, were made according to the accepted "checkerboard" technique described by M. T. Kelley and J. M. Matsen, <u>Antimicrobial Agents and Chemotherapy</u>. 9: 440 (1976). Following a two hour incubation, the amount of radioactivity incorporated in the cells was determined by counting (14C liquid scintillation procedures) for all treated and untreated samples. The percent reduction of each treated sample was calculated from the relationship:

$$\frac{\underline{Control\ 14C(cpm)} - \underline{Treated\ 14C(cpm)}}{Control\ 14C(cpm)} \times 100 = \%\ reduction$$

Plotting the % reduction of 14C level against the concentration of each biocide acting alone results in a dose-response curve, from which the biocide dose necessary to achieve any given % reduction can be interpolated.

Synergism was determined by the method of calculation described by F. C. Kull, P. C. Eisman, H. D. Sylwestrowicz and R. L. Mayer, <u>Applied Microbiology</u> 9,538 (1961) using the relationship:

$$\frac{Q_A}{Q_a} + \frac{Q_B}{Q_b} = synergism\ index\ (SI)$$

where:

$Q_a$ = quantity of compound A, acting alone, producing an end point
$Q_b$ = quantity of compound B, acting alone, producing an end point
$Q_A$ = quantity of compound A in mixture, producing an end point
$Q_B$ = quantity of compound B in mixture, producing an end point

The end point used in the calculations is the % reduction caused by each mixture of A and B. $Q_A$ and $Q_B$ are the individual concentrations in the A/B mixture causing a given % reduction. $Q_a$ and $Q_b$ are determined by interpolation from the respective dose-response curves of A and B as those concentrations of A and B acting alone which produce the same % reduction as each specific mixture produced.

Dose-response curves for each active acting alone were determined by linear regression analysis of the dose-response data. Data were fitted to a curve represented by the equation shown with each data set. After linearizing the data, the contributions of each biocide component in the biocide mixtures to the inhibition of radioisotope uptake were determined by interpolation with the dose-response curve of the respective biocide. If, for example, quantities of $Q_A$ plus $Q_B$ are sufficient to give a 50% reduction in 14C content, $Q_a$ and $Q_b$ are those quantities of A or B acting alone, respectively, found to give 50% reduction in 14C content. A synergism index (SI) is calculated for each combination of A and B.

Where the SI is less than 1, synergism exists. Where the SI = 1, additivity exists. Where SI is greater than 1, antagonism exists.

The data in the following tables come from treating <u>Klebsiella pneumoniae,</u> a common nuisance bacterial type found in industrial cooling waters and in pulping and paper making systems, with varying ratios and concentrations of TPC and each additional biocidal component. Shown for each combination is the % reduction of 14C content (% I), the calculated SI, and the weight ratio of TPC and each additional biocidal component.

## TABLE I

### TPC and Hypochlorite

| ppm TPC[1] | ppm Hypochlorite[2] | Ratio TPC: Hypochlorite | % I | SI |
|---|---|---|---|---|
| 0 | 250 | 0:100 | 97 | |
| 0 | 175 | 0:100 | 96 | |
| 0 | 125 | 0:100 | 95 | |
| 0 | 87.5 | 0:100 | 0 | |
| 0 | 62.5 | 0:100 | 0 | |
| 0 | 31.25 | 0:100 | 0 | |
| 100 | 0 | 100:0 | 99 | |
| 80 | 0 | 100:0 | 97 | |
| 50 | 0 | 100:0 | 76 | |
| 40 | 0 | 100:0 | 70 | |
| 25 | 0 | 100:0 | 58 | |
| 20 | 0 | 100:0 | 40 | |
| 100 | 250 | 1:2.5 | 100 | 2.42 |
| 100 | 175 | 1:1.75 | 100 | 2.02 |
| 100 | 125 | 1:1.25 | 100 | 1.75 |
| 100 | 87.5 | 1.14:1 | 100 | 1.54 |
| 100 | 62.5 | 1.6:1 | 100 | 1.41 |
| 100 | 31.25 | 3.2:1 | 99 | 1.28 |
| 80 | 250 | 1:3.13 | 99 | 2.26 |
| 80 | 175 | 1:2.19 | 99 | 1.84 |
| 80 | 125 | 1:1.56 | 99 | 1.57 |
| 80 | 87.5 | 1:1.09 | 99 | 1.37 |
| 80 | 62.5 | 1.28:1 | 99 | 1.23 |
| 80 | 31.25 | 2.56:1 | 98 | 1.08 |
| 50 | 250 | 1:5 | 99 | 1.92 |
| 50 | 175 | 1:3.5 | 99 | 1.51 |
| 50 | 125 | 1:2.5 | 99 | 1.24 |
| 50 | 87.5 | 1:1.75 | 99 | 1.03 |
| 50 | 62.5 | 1:1.25 | 99 | 0.90* |
| 50 | 31.25 | 1.6:1 | 96 | 0.78* |
| 40 | 250 | 1:6.25 | 98 | 1.84 |
| 40 | 175 | 1:4.38 | 98 | 1.42 |
| 40 | 125 | 1:3.13 | 98 | 1.14 |
| 40 | 87.5 | 1:2.19 | 97 | 0.96 |
| 40 | 62.5 | 1:1.56 | 98 | 0.80* |
| 40 | 31.25 | 1.28:1 | 93 | 0.71* |

TABLE I Cont'd

TPC and Hypochlorite

| ppm TPC[1] | ppm Hypochlorite[2] | Ratio TPC:Hypochlorite | % I | SI |
|---|---|---|---|---|
| 25 | 250 | 1:10 | 98 | 1.66 |
| 25 | 175 | 1:7 | 98 | 1.25 |
| 25 | 125 | 1:5 | 98 | 0.97 |
| 25 | 87.5 | 1:3.5 | 96 | 0.80* |
| 25 | 62.5 | 1:2.5 | 97 | 0.64* |
| 25 | 31.25 | 1:1.25 | 88 | 0.57* |
| 20 | 250 | 1:12.5 | 98 | 1.61 |
| 20 | 175 | 1:8.75 | 97 | 1.21 |
| 20 | 125 | 1:6.25 | 97 | 0.93* |
| 20 | 87.5 | 1:4.38 | 96 | 0.74* |
| 20 | 62.5 | 1:3.13 | 97 | 0.58* |
| 20 | 31.25 | 1:1.56 | 79 | 0.60* |

[1] product containing 50% actives TPC
[2] product containing 5% actives Hypochlorite

## TABLE II

### TPC and Hypochlorite

| ppm TPC[1] | ppm Hypochlorite[2] | Ratio TPC:Hypochlorite | % I | SI |
|---|---|---|---|---|
| 0 | 250 | 0:100 | 96 | |
| 0 | 175 | 0:100 | 95 | |
| 0 | 125 | 0:100 | 93 | |
| 0 | 87.5 | 0:100 | 0 | |
| 0 | 62.5 | 0:100 | 0 | |
| 0 | 31.25 | 0:100 | 0 | |
| 100 | 0 | 100:0 | 97 | |
| 80 | 0 | 100:0 | 90 | |
| 50 | 0 | 100.0 | 76 | |
| 40 | 0 | 100:0 | 64 | |
| 25 | 0 | 100:0 | 52 | |
| 20 | 0 | 100:0 | 35 | |
| 100 | 250 | 1:2.5 | 100 | 2.34 |
| 100 | 175 | 1:1.75 | 100 | 1.94 |
| 100 | 125 | 1:1.25 | 100 | 1.66 |
| 100 | 87.5 | 1.14:1 | 100 | 1.46 |
| 100 | 62.5 | 1.6:1 | 100 | 1.32 |
| 100 | 31.25 | 3.2:1 | 100 | 1.15 |
| 80 | 250 | 1:3.13 | 99 | 2.19 |
| 80 | 175 | 1:2.19 | 99 | 1.76 |
| 80 | 125 | 1:1.56 | 100 | 1.47 |
| 80 | 87.5 | 1:1.09 | 99 | 1.29 |
| 80 | 62.5 | 1.28:1 | 99 | 1.15 |
| 80 | 31.25 | 2.56:1 | 98 | 1.0 |
| 50 | 250 | 1:5 | 99 | 1.89 |
| 50 | 175 | 1:3.5 | 99 | 1.47 |
| 50 | 125 | 1:2.5 | 98 | 1.21 |
| 50 | 87.5 | 1:1.75 | 98 | 1.0 |
| 50 | 62.5 | 1:1.25 | 98 | 0.86* |
| 50 | 31.25 | 1.6:1 | 93 | 0.77* |
| 40 | 250 | 1:6.25 | 98 | 1.81 |
| 40 | 175 | 1:4.38 | 98 | 1.39 |
| 40 | 125 | 1:3.13 | 98 | 1.11 |
| 40 | 87.5 | 1:2.19 | 97 | 0.94* |
| 40 | 62.5 | 1:1.56 | 98 | 0.76* |
| 40 | 31.25 | 1.28:1 | 91 | 0.69* |

## TABLE II Cont'd

## TPC and Hypochlorite

| ppm TPC[1] | ppm Hypochlorite[2] | Ratio TPC: Hypochlorite | % I | SI |
|---|---|---|---|---|
| 25 | 250 | 1:10 | 98 | 1.65 |
| 25 | 175 | 1:7 | 97 | 1.29 |
| 25 | 125 | 1:5 | 97 | 1.0 |
| 25 | 87.5 | 1:3.5 | 96 | 0.77* |
| 25 | 62.5 | 1:2.5 | 97 | 0.63* |
| 25 | 31.25 | 1:1.25 | 80 | 0.63* |
| 20 | 250 | 1:12.5 | 98 | 1.60 |
| 20 | 175 | 1:8.75 | 97 | 1.24 |
| 20 | 125 | 1:6.25 | 97 | 0.95 |
| 20 | 87.5 | 1:4.38 | 96 | 0.72* |
| 20 | 62.5 | 1:3.13 | 96 | 0.60* |
| 20 | 31.25 | 1:1.56 | 60 | 0.84* |

[1] product containing 50% actives TPC
[2] product containing 5% actives Hypochlorite

## TABLE III

### TPC and TTT

| ppm TPC[1] | ppm Trichloro-s-Triazine Trione[2] | Ratio TPC: Trichloro-s-Triazine Trione | % I | SI |
|---|---|---|---|---|
| 0 | 20 | 0:100 | 91 | |
| 0 | 10 | 0:100 | 0 | |
| 0 | 7.5 | 0:100 | 0 | |
| 0 | 6 | 0:100 | 0 | |
| 0 | 5 | 0:100 | 0 | |
| 0 | 2.5 | 0:100 | 0 | |
| 100 | 0 | 100:0 | 94 | |
| 80 | 0 | 100:0 | 89 | |
| 50 | 0 | 100:0 | 63 | |
| 40 | 0 | 100:0 | 61 | |
| 25 | 0 | 100:0 | 31 | |
| 20 | 0 | 100:0 | 24 | |
| 100 | 20 | 5:1 | 99 | 1.93 |
| 100 | 10 | 10:1 | 99 | 1.45 |
| 100 | 7.5 | 13.3:1 | 99 | 1.33 |
| 100 | 6 | 16.7:1 | 99 | 1.26 |
| 100 | 5 | 20:1 | 99 | 1.21 |
| 100 | 2.5 | 40:1 | 99 | 1.09 |
| 80 | 20 | 4:1 | 99 | 1.73 |
| 80 | 10 | 8:1 | 99 | 1.26 |
| 80 | 7.5 | 10.67:1 | 95 | 1.21 |
| 80 | 6 | 13.3:1 | 98 | 1.08 |
| 80 | 5 | 16:1 | 98 | 1.03 |
| 80 | 2.5 | 32:1 | 96 | 0.95 |
| 50 | 20 | 2.5:1 | 98 | 1.46 |
| 50 | 10 | 5:1 | 98 | 0.98 |
| 50 | 7.5 | 6.67:1 | 90 | 0.97 |
| 50 | 6 | 8.3:1 | 90 | 0.89* |
| 50 | 5 | 10:1 | 91 | 0.82* |
| 50 | 2.5 | 20:1 | 81 | 0.85* |
| 40 | 20 | 2:1 | 90 | 1.48 |
| 40 | 10 | 4:1 | 97 | 0.89* |
| 40 | 7.5 | 5.3:1 | 88 | 0.87* |
| 40 | 6 | 6.67:1 | 92 | 0.75* |
| 40 | 5 | 8:1 | 88 | 0.75* |
| 40 | 2.5 | 16:1 | 76 | 0.77* |

## TABLE III (Cont'd)

### TPC and TTT

| ppm TPC[1] | ppm Trichloro-s-Triazine Trione[2] | Ratio TPC: Trichloro-s-Triazine Trione | % I | SI |
|---|---|---|---|---|
| 25 | 20 | 1.25:1 | 96 | 1.23 |
| 25 | 10 | 2.5:1 | 96 | 0.75* |
| 25 | 7.5 | 3.3:1 | 74 | 0.83* |
| 25 | 6 | 4.17:1 | 80 | 0.69* |
| 25 | 5 | 5:1 | 74 | 0.69* |
| 25 | 2.5 | 10:1 | 48 | 0.90* |
| 20 | 20 | 1:1 | 92 | 1.22 |
| 20 | 10 | 2:1 | 93 | 0.71* |
| 20 | 7.5 | 2.67:1 | 63 | 0.87* |
| 20 | 6 | 3.33:1 | 67 | 0.73* |
| 20 | 5 | 4:1 | 61 | 0.74* |
| 20 | 2.5 | 8:1 | 33 | 0.98 |

[1] product containing 50% actives TPC
[2] product containing 95% actives Trichloro-s-Triazine Trione

## TABLE IV

### TPC and TTT

| ppm TPC[1] | ppm Trichloro-s-Triazine Trione[2] | Ratio TPC: Trichloro-s-Triazine Trione | % I | SI |
|---|---|---|---|---|
| 0 | 20 | 0:100 | 98 | |
| 0 | 10 | 0:100 | 0 | |
| 0 | 7.5 | 0:100 | 0 | |
| 0 | 6 | 0:100 | 0 | |
| 0 | 5 | 0:100 | 0 | |
| 0 | 2.5 | 0:100 | 0 | |
| 100 | 0 | 100:0 | 97 | |
| 80 | 0 | 100:0 | 87 | |
| 50 | 0 | 100:0 | 71 | |
| 40 | 0 | 100:0 | 56 | |
| 25 | 0 | 100:0 | 38 | |
| 20 | 0 | 100:0 | 10 | |
| 100 | 20 | 5:1 | 99 | 2.05 |
| 100 | 10 | 10:1 | 99 | 1.55 |
| 100 | 7.5 | 13.3:1 | 99 | 1.43 |
| 100 | 6 | 16.7:1 | 99 | 1.35 |
| 100 | 5 | 20:1 | 99 | 1.30 |
| 100 | 2.5 | 40:1 | 98 | 1.20 |
| 80 | 20 | 4:1 | 99 | 1.84 |
| 80 | 10 | 8:1 | 99 | 1.34 |
| 80 | 7.5 | 10.67:1 | 99 | 1.22 |
| 80 | 6 | 13.3:1 | 98 | 1.16 |
| 80 | 5 | 16:1 | 96 | 1.15 |
| 80 | 2.5 | 32:1 | 95 | 1.04 |
| 50 | 20 | 2.5:1 | 99 | 1.52 |
| 50 | 10 | 5:1 | 98 | 1.04 |
| 50 | 7.5 | 6.67:1 | 98 | 0.91* |
| 50 | 6 | 8.3:1 | 95 | 0.87* |
| 50 | 5 | 10:1 | 93 | 0.85* |
| 50 | 2.5 | 20:1 | 86 | 0.80* |
| 40 | 20 | 2:1 | 98 | 1.43 |
| 40 | 10 | 4:1 | 95 | 0.96 |
| 40 | 7.5 | 5.3:1 | 94 | 0.85* |
| 40 | 6 | 6.67:1 | 92 | 0.79* |
| 40 | 5 | 8:1 | 87 | 0.80* |
| 40 | 2.5 | 16:1 | 72 | 0.86* |

## TABLE IV Cont'd

### TPC and TTT

| ppm TPC[1] | ppm Trichloro-s-Triazine Trione[2] | Ratio TPC: Trichloro-s-Triazine Trione | % I | SI |
|---|---|---|---|---|
| 25 | 20 | 1.25:1 | 97 | 1.28 |
| 25 | 10 | 2.5:1 | 96 | 0.79* |
| 25 | 7.5 | 3.3:1 | 90 | 0.70* |
| 25 | 6 | 4.17:1 | 87 | 0.65* |
| 25 | 5 | 5:1 | 76 | 0.69* |
| 25 | 2.5 | 10:1 | 52 | 0.82* |
| 20 | 20 | 1:1 | 97 | 1.22 |
| 20 | 10 | 2:1 | 94 | 0.74* |
| 20 | 7.5 | 2.67:1 | 84 | 0.68* |
| 20 | 6 | 3.33:1 | 71 | 0.71* |
| 20 | 5 | 4:1 | 62 | 0.73* |
| 20 | 2.5 | 8:1 | 34 | 0.93* |

[1] product containing 50% actives TPC
[2] product containing 95% actives Trichloro-s-triazine trione

TABLE  V

TPC and BCH

| ppm TPC[1] | ppm BCH[2] | Ratio TPC:BCH | % I | SI |
|---|---|---|---|---|
| 0 | 40 | 0:100 | 96 | |
| 0 | 20 | 0:100 | 89 | |
| 0 | 15 | 0:100 | 90 | |
| 0 | 10 | 0:100 | 0 | |
| 0 | 5 | 0:100 | 0 | |
| 0 | 2.5 | 0:100 | 0 | |
| 100 | 0 | 100:0 | 95 | |
| 80 | 0 | 100:0 | 88 | |
| 50 | 0 | 100:0 | 70 | |
| 40 | 0 | 100:0 | 53 | |
| 25 | 0 | 100:0 | 34 | |
| 20 | 0 | 100:0 | 25 | |
| 100 | 40 | 2.5:1 | 100 | 2.23 |
| 100 | 20 | 5:1 | 100 | 1.59 |
| 100 | 15 | 6.67:1 | 99 | 1.45 |
| 100 | 10 | 10:1 | 99 | 1.29 |
| 100 | 5 | 20:1 | 98 | 1.15 |
| 100 | 2.5 | 40:1 | 98 | 1.07 |
| 80 | 40 | 2:1 | 99 | 2.07 |
| 80 | 20 | 4:1 | 99 | 1.42 |
| 80 | 15 | 5.33:1 | 99 | 1.26 |
| 80 | 10 | 8:1 | 97 | 1.14 |
| 80 | 5 | 16:1 | 96 | 0.99 |
| 80 | 2.5 | 32:1 | 93 | 0.97 |
| 50 | 40 | 1.25:1 | 99 | 1.78 |
| 50 | 20 | 25:1 | 99 | 1.13 |
| 50 | 15 | 3.33:1 | 98 | 0.99 |
| 50 | 10 | 5:1 | 97 | 0.84* |
| 50 | 5 | 10:1 | 90 | 0.77* |
| 50 | 2.5 | 20:1 | 79 | 0.85* |
| 40 | 40 | 1:1 | 99 | 1.69 |
| 40 | 20 | 2:1 | 98 | 1.05 |
| 40 | 15 | 2.67:1 | 99 | 0.87* |
| 40 | 10 | 4:1 | 98 | 0.73* |
| 40 | 5 | 8:1 | 74 | 0.88* |
| 40 | 2.5 | 16:1 | 70 | 0.84* |

### TABLE V Cont'd

### TPC and BCH

| ppm TPC[1] | ppm BCH[2] | Ratio TPC:BCH | % I | SI |
|---|---|---|---|---|
| 25 | 40 | 1:1.6 | 99 | 1.54 |
| 25 | 20 | 1.25:1 | 96 | 0.93* |
| 25 | 15 | 1.67:1 | 91 | 0.82* |
| 25 | 10 | 2.5:1 | 82 | 0.75* |
| 25 | 5 | 5:1 | 68 | 0.71* |
| 25 | 2.5 | 10:1 | 44 | 0.96 |
| 20 | 40 | 1:2 | 99 | 1.49 |
| 20 | 20 | 1:1 | 94 | 0.90* |
| 20 | 15 | 1.33:1 | 97 | 0.70* |
| 20 | 10 | 2:1 | 87 | 0.62* |
| 20 | 5 | 4:1 | 59 | 0.72* |
| 20 | 2.5 | 8:1 | 32 | 1.01* |

[1] product containing 50% actives TPC
[2] product containing 95% actives BCH

TABLE VI

TPC and BCH

| ppm TPC[1] | ppm BCH[2] | Ratio TPC:BCH | % I | SI |
|---|---|---|---|---|
| 0 | 40 | 0:100 | 99 | |
| 0 | 20 | 0:100 | 99 | |
| 0 | 15 | 0:100 | 95 | |
| 0 | 10 | 0:100 | 76 | |
| 0 | 5 | 0:100 | 0 | |
| 0 | 2.5 | 0:100 | 0 | |
| 100 | 0 | 100:0 | 99 | |
| 80 | 0 | 100:0 | 94 | |
| 50 | 0 | 100.0 | 72 | |
| 40 | 0 | 100:0 | 57 | |
| 25 | 0 | 100:0 | 28 | |
| 20 | 0 | 100:0 | 21 | |
| 100 | 40 | 2.5:1 | 100 | 2.89 |
| 100 | 20 | 5:1 | 100 | 1.98 |
| 100 | 15 | 6.67:1 | 100 | 1.76 |
| 100 | 10 | 10:1 | 99 | 1.55 |
| 100 | 5 | 20:1 | 99 | 1.33 |
| 100 | 2.5 | 40:1 | 99 | 1.21 |
| 80 | 40 | 2:1 | 100 | 2.68 |
| 80 | 20 | 4:1 | 100 | 1.77 |
| 80 | 15 | 5.33:1 | 100 | 1.54 |
| 80 | 10 | 8:1 | 99 | 1.33 |
| 80 | 5 | 16:1 | 98 | 1.14 |
| 80 | 2.5 | 32:1 | 98 | 1.02 |
| 50 | 40 | 1.25:1 | 100 | 2.35 |
| 50 | 20 | 2.5:1 | 99 | 1.46 |
| 50 | 15 | 3.33:1 | 100 | 1.22 |
| 50 | 10 | 5:1 | 99 | 1.0 |
| 50 | 5 | 10:1 | 93 | 0.88* |
| 50 | 2.5 | 20:1 | 81 | 0.95 |
| 40 | 40 | 1:1 | 99 | 2.26 |
| 40 | 20 | 2:1 | 99 | 1.35 |
| 40 | 15 | 2.67:1 | 99 | 1.12 |
| 40 | 10 | 4:1 | 99 | 0.89* |
| 40 | 5 | 8:1 | 89 | 0.81* |
| 40 | 2.5 | 16:1 | 63 | 1.10 |

TABLE VI Cont'd

TPC and BCH

| ppm TPC[1] | ppm BCH[2] | Ratio TPC:BCH | % I | SI |
|---|---|---|---|---|
| 25 | 40 | 1:1.6 | 100 | 2.09 |
| 25 | 20 | 1.25:1 | 99 | 1.18 |
| 25 | 15 | 1.67:1 | 97 | 1.0 |
| 25 | 10 | 2.5:1 | 99 | 0.73* |
| 25 | 5 | 5:1 | 82 | 0.69* |
| 25 | 2.5 | 10:1 | 82 | 0.53* |
| 20 | 40 | 1:2 | 99 | 2.04 |
| 20 | 20 | 1:1 | 99 | 1.13 |
| 20 | 15 | 1.33:1 | 99 | 0.90* |
| 20 | 10 | 2:1 | 98 | 0.70* |
| 20 | 5 | 4:1 | 75 | 0.71* |
| 20 | 2.5 | 8:1 | 35 | 1.16 |

[1] product containing 50% actives TPC
[2] product containing 95% actives BCH

Asterisks in the SI column indicate synergistic combinations in accordance with the Kull method supra.

In the preceding tables, for all combinations tested, differences seen between the replicates are due to normal experimental variance.

In accordance with the preceding tables, unexpected results occurred more frequently within the following product ratios:

|  | From about |
|---|---|
| TPC to hypochlorite | 1.6:1 to 1:6.25 |
| TPC to TTT | 20:1 to 2:1 |
| TPC to BCH | 20:1 to 1:1 |

The individual products contain the following amounts of active biocidal components:

| TPC | about 50% |
|---|---|
| Hypochlorite: | about 5% |
| TTT: | about 95% |
| BCH: | about 95% |

Therefore, when based on the active biocidal component, unexpected results appear more frequently within the following ranges of active components:

| | From about |
|---|---|
| TPC to hypochlorite | 16:1 to 1.6:1 |
| TPC to TTT | 10.5:1 to 1:1 |
| TPC to BCH | 10:1 to 1:1.9 |

At present, it is most preferred that commercial products embodying the invention comprise weight ratios of active components of about:

10:1    TPC: hypochlorite
2:1     TPC: TTT
2:1     TPC: BCH

## Claims

1.  A bacterial inhibiting composition which comprises a synergistic mixture of (a) n-tributyl tetradecyl phosphonium chloride (TPC) and (b) at least one additional biocidal component, selected from:

    1. sodium hypochlorite,
    2. trichloro-s-triazine trione, and
    3. bromochlorohydantoin.

2.  A composition according to claim 1 wherein the weight ratio of (a) to sodium hypochlorite is from about 16:1 to 1.6:1.

3.  A composition according to claim 1, wherein the weight ratio of (A) to trichloro-s-triazine trione is from about 10.5:1 to 1:1.

4.  A composition according to claim 1, wherein the weight ratio of (A) to bromochlorohydantoin is from about 10:1 to 1:1.9.

5.  A method for controlling the growth of bacteria in an aqueous system which comprises adding to the system from about 0.1 to 200 parts by weight of a composition per one million parts by weight of said aqueous system, the composition being as defined in any of claims 1 to 4.

6.  A method according to claim 5, wherein the bacteria are Klebsiella pneumoniae bacteria.

7.  A method according to claim 5 or 6, wherein the composition is added to the system in an amount, by weight, of from about 5 to about 50 parts per million of the aqueous system.

8.  A method according to any of claims 5 to 7, wherein the aqueous system comprises a cooling water system.

9.  A method according to any of claims 5 to 8, wherein the aqueous system comprises a pulping and papermaking system.

## Patentansprüche

1.  Bakterienhemmende Zusammensetzung, die ein synergistisches Gemisch aus (a) n-Tributyltetradecylphosphoniumchlorid (TPC) und (b) mindestens einer zusätzlichen biziden Komponente umfaßt, die ausgewählt wird aus:

    1. Natriumhypochlorit,
    2. Trichlor-s-triazintrion und
    3. Bromchlorhydantoin.

**2.** Zusammensetzung nach Anspruch 1, worin das Gewichtsverhältnis von (a) zu Natriumhypochlorit von circa 16:1 bis 1,6:1 ist.

**3.** Zusammensetzung nach Anspruch 1, worin das Gewichtsverhältnis von (a) zu Trichlor-s-triazintrion von circa 10,5:1 bis 1:1 ist.

**4.** Zusammensetzung nach Anspruch 1, worin das Gewichtsverhältnis von (a) zu Bromchlorhydantoin von circa 10:1 bis 1:1,9 ist.

**5.** Verfahren zur Kontrolle des Bakterienwachstums in einem wäßrigen System, das die Zugabe zu dem System von circa 0,1 Gewichtsteil bis 200 Gewichtsteile einer Zusammensetzung auf eine Million Gewichtsteile von genanntem wäßrigem System umfaßt, wobei die Zusammensetzung wie in einem der Ansprüche 1 bis 4 definiert ist.

**6.** Verfahren nach Anspruch 5, worin die Bakterien <u>Klebsiella pneumoniae</u>-Bakterien sind.

**7.** Verfahren nach Anspruch 5 oder 6, worin die Zusammensetzung dem System in einer Gewichtsmenge von circa 5 bis circa 50 Teilen auf eine Million des wäßrigen Systems zugesetzt wird.

**8.** Verfahren nach einem der Ansprüche 5 bis 7, worin das wäßrige System ein Kühlwassersystem umfaßt.

**9.** Verfahren nach einem der Ansprüche 5 bis 8, worin das wäßrige System ein Aufschluß- und Papierherstellungssystem umfaßt.

## Revendications

**1.** Composition inhibitrice des bactéries qui comprend un mélange à effet synergique de (a) chlorure de n-tributyltétradécylphosphonium (TPC) et (b) au moins un composant biocide supplémentaire choisi parmi :

    1. l'hypochlorite de sodium,
    2. la trichloro-s-triazine-trione, et
    3. la bromochlorohydantoïne.

**2.** Composition selon la revendication 1, dans laquelle le rapport en poids de (a) sur l'hypochlorite de sodium est d'environ 16:1 à 1,6:1.

**3.** Composition selon la revendication 1, dans laquelle le rapport en poids de (a) sur la trichloro-s-triazine-trione est d'environ 10,5:1 à 1:1.

**4.** Composition selon la revendication 1, dans laquelle le rapport en poids de (a) sur la bromochlorohydantoïne est d'environ 10:1 à 1:1,9.

**5.** Procédé pour contrôler la croissance de bactéries dans un système aqueux qui comprend le fait d'ajouter au système d'environ 0,1 à 200 parties en poids d'une composition pour un million de parties en poids dudit système aqueux, la composition étant telle que définit dans l'une quelconque des revendications 1 à 4.

**6.** Procédé selon la revendication 5, dans lequel les bactéries sont les bactéries <u>Klebsiella pneumoniae</u>.

**7.** Procédé selon la revendication 5 ou 6, dans lequel la composition est ajoutée au système selon une quantité en poids allant d'environ 5 à environ 50 parties par million du système aqueux.

**8.** Procédé selon l'une quelconque des revendications 5 à 7, dans lequel le système aqueux comprend un système d'eau de refroidissement.

**9.** Procédé selon l'une quelconque des revendications 5 à 8, dans lequel le système aqueux comprend un système de fabrication de pâte à papier et de papier.